# EUROPÄISCHE PATENTSCHRIFT

(11) **EP 3 504 053 B1**
(45) Veröffentlichungstag und Bekanntmachung des Hinweises auf die Patenterteilung: **29.12.2021**
(21) Anmeldenummer: 17731135.4
(22) Anmeldetag: 19.06.2017
(51) Int. Cl.: B29D 29/00, F16G 5/06, B29D 29/10, B65H 21/00

(54) **VERFAHREN ZUR MEHRSTUFIGEN HERSTELLUNG EINES ZUG- ODER TRAGMITTELS**
PROCESS FOR THE MULTI-STAGE PRODUCTION OF A TRACTION OR CARRYING MEANS
PROCÉDÉ DE FABRICATION EN PLUSIEURS ÉTAPES D'UN MOYEN DE TRACTION OU DE SUPPORT

(30) Priorität: 23.08.2016 DE 102016215730
(43) Veröffentlichungstag der Anmeldung: 03.07.2019
(73) Patentinhaber: ContiTech Antriebssysteme GmbH, 30165 Hannover (DE)
(72) Erfinder: GÖSER, Hubert, 29451 Dannenberg (DE); KUCHARCZYK, Andre, 29499 Gülden (DE)
(74) Vertreter: Continental Corporation
(86) Internationale Anmeldenummer: PCT/EP2017/064861
(87) Internationale Veröffentlichungsnummer: WO 2018/036682

(56) Entgegenhaltungen:
- EP-A2- 0 888 858
- DE-A1- 10 222 015
- DE-B1- 1 579 102
- JP-A- 2006 347 121
- US-A1- 2013 153 126

## Beschreibung

Die Erfindung betrifft ein Verfahren zur in mehreren Teilschritten erfolgenden Herstellung eines aus mehreren Bauteilen oder Baugruppen aufgebauten Zug- oder Tragmittels aus elastomerem Material, insbesondere zur Herstellung eines Aufzuggurtes, bei dem das elastomere Material vorzugsweise extrudiert wird, wobei in einem ersten Teilschritt die Herstellung eines mit Festigkeitsträgern oder Seilen versehenen ersten Bauteils/Baugruppe des Zug- oder Tragmittels und in weiteren Teilschritten die sukzessive Komplettierung eines mit weiteren Bauteilen verbundenen bzw. mit weiteren Lagen elastomeren Materials, Gewebelagen oder Festigkeitsträgerlagen versehenen Zug- oder Tragmittels sowie ggf. dessen ein- oder mehrseitige Profilierung bzw. Formung erfolgt, wobei die Verbindung der einzelnen Bauteile des Zug- oder Tragmittels sowie dessen Formung und Komplettierung durch weitere Lagen in den einzelnen Teilschritten mittels ggf. profilierten Formrädern erfolgt, auf die die einzelnen Bauteile oder Lagen aufgegeben und mit Hilfe von Andruckrollen oder rollengeführten und auf einen Umfangssektor der Formräder einwirkenden Andruckbändern zusammengeführt und miteinander verbunden werden.

Verfahren und Vorrichtungen zur mehrstufigen Herstellung von aus mehreren Bauteilen oder Baugruppen aufgebauten Zug- oder Tragmittels mit Hilfe von Formrollen, auf denen die einzelnen Bauteil geformt und miteinander verbunden werden, sind im Stand der Technik im Wesentlichen als zweistufige Verfahren bekannt.

Die DE 102 22 015 A1 offenbart hierzu eine Vorrichtung mit zwei Stationen zur Herstellung eines Riemens aus plastifizierbarem Kunststoff-Material, bei der zunächst ein mit Festigkeitsträgern versehener Teilriemen und dann ein zweiter Teilriemen hergestellt und mit dem ersten Teilriemen verbunden wird. Die erste Station ist dabei mit einem endlosen Formband versehen, das mit Hilfe einer oberen und einer unteren Druckrolle und einer Spannrolle einen Formhohlraum mit einem Formrad bildet, in den auch die Festigkeitsträger einlaufen. Die zweite Station ist dagegen nur mit einer gegen eine weitere Formrolle wirkenden Andruckrolle versehen, wodurch ein zugeführtes weiteres Material mit dem ersten Bauteil verbunden wird. Eine Profilierung ist hier nicht angesprochen.

Die DE 35 27 640 C2 offenbart eine Vorrichtung zur Herstellung von Riemen aus plastifizierbarem Werkstoff mit einer ersten Station für die Fertigung eines ersten Teilriemens und einer zweiten Station für die Fertigung und Anformung eines zweiten Teilriemens an den ersten Teilriemen. Beiden Stationen ist ein Extruder zugeordnet, der den Werkstoff für den jeweils zu fertigenden Teilriemen liefert. Beide Stationen weisen auch jeweils ein endloses Formband und ein drehbares Formrad auf, das längs eines Teilumfanges mit dem Formrad zusammengeführt ist, und zwar so, dass ein Formhohlraum zwischen beiden entsteht. Das Formrad der zweiten Station ist dabei so ausgebildet, dass ein Zahnprofil in eine weitere Lage des Riemens eingeformt wird.

Die CH 430 171 A offenbart ein Verfahren zur Herstellung von Bahnen oder Platten aus thermoplastischen Kunststoffen, bei dem zwischen zwei während der Fertigung durch Rollen geführten Bahnen oder Platten (Bauteile) eine Verstärkungslage einläuft und die Bahnen dann unter Temperatureinwirkung und unter Druck durch zugestellte Rollen miteinander verschmelzen.

Neuere Anforderungen an Zug- oder Tragmittel aus elastomerem Material erfordern die Verwendung weiterer Schichten oder Auflagen, beispielsweise Schichten, die einen erhöhten Brandschutz bereitstellen, Schichten/Gewebe, die bei einer Start-Stopp-Automatik im Kfz den Reibverschleiß von Zahnriemen mindern oder Profile, die bei Aufzugsgurten eine bessere Führung ermöglichen. Zur Herstellung von Zug- oder Tragmitteln für all diese Anwendungen sind die bisher bekannten Vorrichtungen und Verfahren nur bedingt geeignet.

Mit den bisherigen zweistufigen Verfahren können weitere Schichten nur dadurch realisiert werden, dass die Riemen mehrfach durch einen ein- bzw. zweistufigen Prozess geführt werden. Dies gilt insbesondere auch für solche Riemen, die eine beidseitig geformte Deckschicht aufweisen sollen. Bei manchen dieser Riemen für hohe Beanspruchung wird großer Wert darauf gelegt, dass die geformte Deckschicht nicht durch nachfolgende abtragende mechanische Bearbeitung entstehen soll. Dementsprechend kann eine Formung nur dadurch entstehen, dass diese Riemen mehrfach,, durch die Anlage gefahren" werden.

Es entstehen dadurch nicht nur Mehrkosten, sondern es besteht auch ein erhöhtes Risiko, dass die Deckschichten sich nicht ausreichend miteinander verbinden. Polyurethan (PU) beispielsweise ist hygroskopisch und nimmt Feuchtigkeit aus der Umgebung auf, was dann bei Riemen aus diesem Material zu Verarbeitungsproblemen führen kann (Blasenbildung zwischen den Decklagen und daraus resultierende schlechte Verbindung der Schichten)

Die Feuchtigkeitsaufnahme solcher Materialien ist stark abhängig von der Umgebungsfeuchtigkeit und der Einwirkdauer. Bereits nach wenigen Stunden kann schon eine Sättigung erreicht sein. Wird dann z.B. die zweite Deckschicht erst am Folgetag aufgebracht, muss das zu beschichtende Produkt evtl. schon gründlich vorgetrocknet werden.

Auch die Gefahr von Verschmutzungen erhöht sich bei mehrfachem Handling. Diese Verschmutzungen können u.a. auch zu Bindungsstörungen zwischen den Deckschichten führen.

Für die Erfindung bestand also die Aufgabe, ein verbessertes, sicheres Herstellverfahren für Zug- oder Tragmittel bereitzustellen, die aus mehreren Funktionsteilen oder -schichten bestehen und für besondere Anwendungsfälle anpassbar sind und bei dem die genannten Nachteile durch Feuchte oder Verschmutzung nicht mehr bestehen..

Gelöst wird diese Aufgabe durch die Merkmale des Hauptanspruchs. Weitere vorteilhafte Ausbildungen sind in den Unteransprüchen offenbart.

Dabei folgen die einzelnen Teilschritte im Herstellungsverfahren so aufeinander, dass ein in dem jeweilig vorlaufenden Teilschritt bearbeitetes oder komplettiertes Bauteil bei Raumtemperatur (Rt) nach einer Zeitspanne von 1 bis maximal 10 Minuten, vorzugsweise 2 bis 5 Minuten, dem nachfolgenden Teilschritt zur weiteren Bearbeitung bzw. Komplettierung zugeführt wird und dass die Temperatur des Bauteils zwischen einem jeweilig vorlaufenden Teilschritt und dem nachfolgenden Teilschritt 30° C, vorzugweise 40° nicht unterschreitet. Durch eine solche Einstellung des Verfahrens werden eine zu hohe Feuchtigkeitsaufnahme und eine Verschmutzung vermieden und es kommt zu einer sicheren Verbindung aller einzelnen in den unterschiedlichen Teilschritten aufgebrachten Schichten.

Eine vorteilhafte Weiterbildung besteht darin, dass die einzelnen Teilschritte im Verfahren so aufeinander folgen, dass ein in dem jeweilig vorlaufenden Teilschritt bearbeitetes oder komplettiertes Bauteil dem nachfolgenden Teilschritt zur weiteren Bearbeitung bzw. Komplettierung spätestens nach Ablauf einer Zeitspanne zugeführt wird, die ausgehend von 10 Minuten bei Raumtemperatur (Rt) um maximal 10 Minuten pro 10° Temperaturerhöhung verlängert ist, und dass die Temperatur des Bauteils eine obere Grenze von 100° C, vorzugsweise 80° C nicht überschreitet. Dadurch kann in Bezug auf die Feuchtigkeitsaufnahme eine gewisse Flexibilität in der Fertigung erreicht werden, so dass das Verfahren je nach erforderlicher Produktionsgeschwindigkeit auch bei höheren Temperaturen sicher ausgeführt werden kann und Probleme bei der Verbindung der einzelnen Schichten ausgeschlossen werden können.

Eine weitere vorteilhafte Ausbildung des Verfahrens besteht darin, dass das Zug- oder Tragmittel als Keilrippenriemen ausgebildet ist, aus mindestens drei Bauteilen oder Baugruppen aufgebaut ist und in mindestens drei Teilschritten hergestellt wird, wobei im ersten Teilschritt ein erstes Bauteil in Form einer mit Festigkeitsträgern versehenen Rückenlage des Keilrippenriemens auf einem ersten Formrad mit glatter Oberfläche hergestellt wird, im zweiten Teilschritt die Rückenlage mit dem profilierten Unterbau des Keilrippenriemens versehen wird, wobei der Unterbau während des zweiten Teilschritts auf einem zweiten Formrad profiliert wird, und in einem dritten Teilschritt auf einem weiteren Formrad eine weitere Beschichtung, Elastomerlage oder Gewebelage auf den profilierten Unterbau aufgebracht wird. Das Aufbringen von solchen weiteren Beschichtungen, sei es als weitere Lage auf dem geformten Unterbau oder als weitere Lage auf dem in aller Regel glatten Rücken, gestaltet sich durch die bisher im Stand der Technik bekannten Verfahren dagegen relativ umständlich, da die Riemen mehrfach durch die Anlage gefahren werden mussten. Mit dem erfindungsgemäßen Verfahren ist die Herstellung wesentlich vereinfacht.

Dies gilt in verstärktem Maße für eine weitere vorteilhafte Ausbildung des Verfahrens, die darin besteht, dass das Zug- oder Tragmittel als doppelt profilierter Aufzugsgurt ausgebildet ist, aus mindestens drei Bauteilen oder Baugruppen aufgebaut ist und in mindestens drei Teilschritten hergestellt wird, wobei im ersten Teilschritt ein erstes Bauteil in Form einer mit teilweise ummantelten Tragseilen versehenen Lage des Aufzuggurts durch ein auf einem ersten Formrad vorgesehenem Profil hergestellt wird, im zweiten Teilschritt die teilweise ummantelten Tragseile vollständig ummantelt werden, wobei die Ummantelung während des zweiten Teilschritts durch ein auf einem zweiten Formrad vorgesehenem Profil weiter geformt wird, und danach in einem dritten Teilschritt nach einer um 180° erfolgten Verdrehung (Twist) des Aufzuggurts das Bauteil auf ein drittes Formrad aufläuft und dort mit einer profilierten Rückenlage aus elastomerem Material versehen wird, wobei die Rückenlage zwischen Bauteil und drittem Formrad aufgebracht und von letzterem profiliert wird.

Eine weitere vorteilhafte Ausbildung des Verfahrens besteht darin, dass in den einzelnen Teilschritten als elastomeres Material für die Bauteile Polyurethan verwendet wird, das extrudiert auf das jeweilige Formrad aufgebracht wird, wobei die extrudierte Polyurethanschmelze mit einer Temperatur von 180° bis 220° C, vorzugsweise 210°C auf das jeweilige Formrad aufgegeben wird, wobei das Formrad gekühlt wird und die Kühlung des Formrades und dessen Fertigungsgeschwindigkeit so eingestellt sind, dass das jeweilige Bauteil beim Ablaufen vom Formrad eine Temperatur 60° bis 100° C aufweist, und bei dem in den folgenden Teilschritten unmittelbar vor der Aufgabe weiteren extrudierten Materials das vorlaufende, bereits fertiggestellte Bauteil auf seiner mit dem weiteren Bauteilen zu verbindenden Oberfläche auf eine Temperatur von 160° bis 200°C aufgeheizt wird. Durch eine solche Verfahrensführung erreicht man eine ausgezeichnete Formbarkeit in den einzelnen Teilschritten sowie eine ausreichende Rekristallisierung und Stabilisierung der Formgebung zwischen den einzelnen Formschritten/Teilschritten. Durch das Aufheizen vor der Aufgabe weiteren Materials bzw. weiterer Bauteile wird die Haftung zwischen den einzelnen Baugruppen/Bauteilen optimiert.

Das Verfahren lässt sich in gleicher vorteilhafter Weise auch zur Herstellung von mehrschichtigen Transportbändern verwenden.

Anhand eines Ausführungsbeispiels soll die Erfindung näher erläutert werden. Es zeigen
- Fig. 1: einer Prinzipskizze die Durchführung des Verfahrens zur Herstellung eines Keilrippenriemens
- Fig. 2: einer Prinzipskizze die Durchführung des Verfahrens zur Herstellung eines doppelt profilierten Aufzuggurts

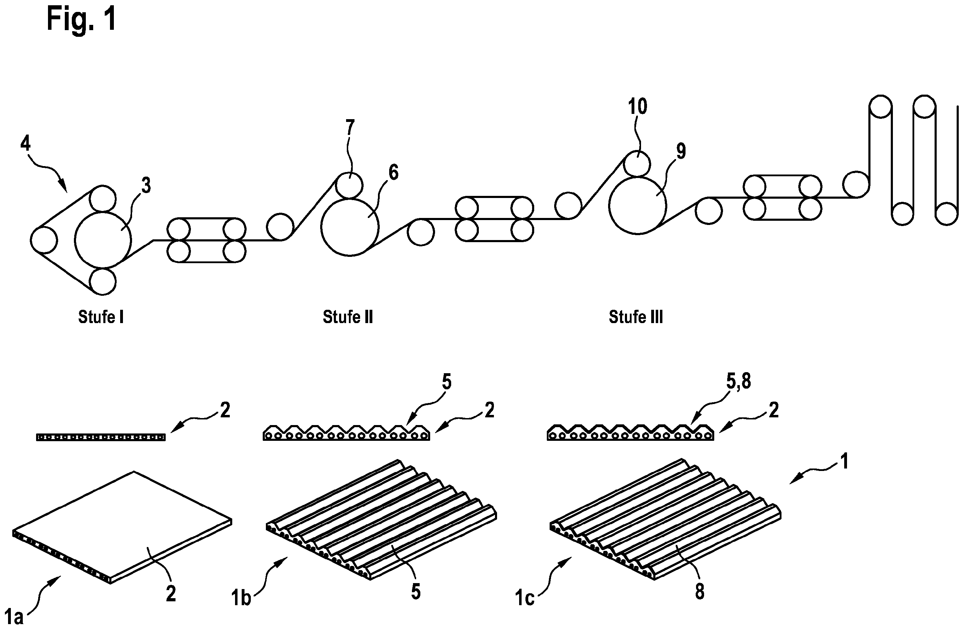

Fig. 1 zeigt in Form einer Prinzipskizze die Durchführung des Verfahrens zur Herstellung eines Keilrippenriemens, bei dem die profilierten Keilrippen mit einer speziellen Brandschutzbeschichtung versehen sind.

Das Zug- oder Tragmittel ist hier als Keilrippenriemen 1 ausgebildet, besteht aus drei Bauteilen oder Baugruppen 1a, 1b und 1c und wird in drei Teilschritten hergestellt, in der Skizze mit Stufe I, Stufe II und Stufe III bezeichnet.

Im ersten Teilschritt (Stufe I) wird ein erstes Bauteil in Form einer mit Festigkeitsträgern versehenen Rückenlage 2 des Keilrippenriemens hergestellt.

Dies erfolgt auf einem ersten Formrad 3, das eine im Wesentlichen glatte Oberfläche besitzt. Dabei wird - hier nicht näher dargestellt - ein plastifizierbares elastomeres

Material, zum Beispiel Polyurethan, aus einem Extruder auf das temperierte Formrad gegeben. Gleichzeitig laufen über eine entsprechende Zuführungen die Festigkeitsträger bzw. Corde in das elastomere Material und auf das Formrad.

Mit einem rollengeführten und auf einen Umfangssektor des Formrads einwirkenden Andruckband 4 werden die Festigkeitsträger und das extrudierte Material weiter zusammengeführt und auf dem glatten Formrad 3 unter Druck miteinander verbunden.

Im zweiten Teilschritt (Stufe II) wird die Rückenlage 2 mit dem profilierten Unterbau 5 des Keilrippenriemens versehen, den eigentlichen "Rippen" des Keilrippenriemens. Dazu wird weiteres elastomeres Material aus einem ebenfalls hier nicht näher dargestellten zweiten Extruder zusammen mit der Rückenlage 2 auf das Formrad 6 aufgegeben und unter Druck, hier durch die Andruckrolle 7 miteinander verbunden. Der Unterbau 5 wird während des zweiten Teilschritts auf dem Formrad 6 profiliert.

In einem dritten Teilschritt (Stufe III) wird eine weitere brandhemmende Elastomerbeschichtung auf den profilierten Unterbau aufgebracht. Hierzu wird ein mit brandhemmenden Zusätzen versehenes elastomeres Material 8 aus einem hier ebenfalls nicht näher dargestellten dritten Extruder zusammen mit der bereits mit dem Unterbau 5 versehenen Rückenlage 2 auf das Formrad 9 aufgegeben und unter Druck der Andruckrolle 10 als weitere Lage auf den bestehenden Verbund aufgebracht. Das mit brandhemmenden Zusätzen versehene elastomere Material 8 wird während des dritten Teilschritts auf dem Formrad 9 profiliert, d.h. hier in das bereits ausgeprägte Profil eingeformt.

Der hier gezeigte Keilrippenriemen wird bei Raumtemperatur hergestellt. Die einzelnen Teilschritte im Verfahren folgen so aufeinander, dass ein in dem jeweilig vorlaufenden Teilschritt bearbeitetes oder komplettiertes Bauteil bei Raumtemperatur (Rt) nach maximal 1 bis 10 Minuten, hier 4 Minuten, dem nachfolgenden Teilschritt zur weiteren Bearbeitung bzw. Komplettierung zugeführt wird und dass die Temperatur des Bauteils zwischen einem jeweilig vorlaufenden Teilschritt und dem nachfolgenden Teilschritt 30° C, vorzugweise 40° nicht unterschreitet. Dies ist mit der in der Figur 1 gezeigten kontinuierlich arbeitenden Herstellungsanlage ohne weiteres möglich und führt zu einem sicheren Verbund der einzelnen Schichten.

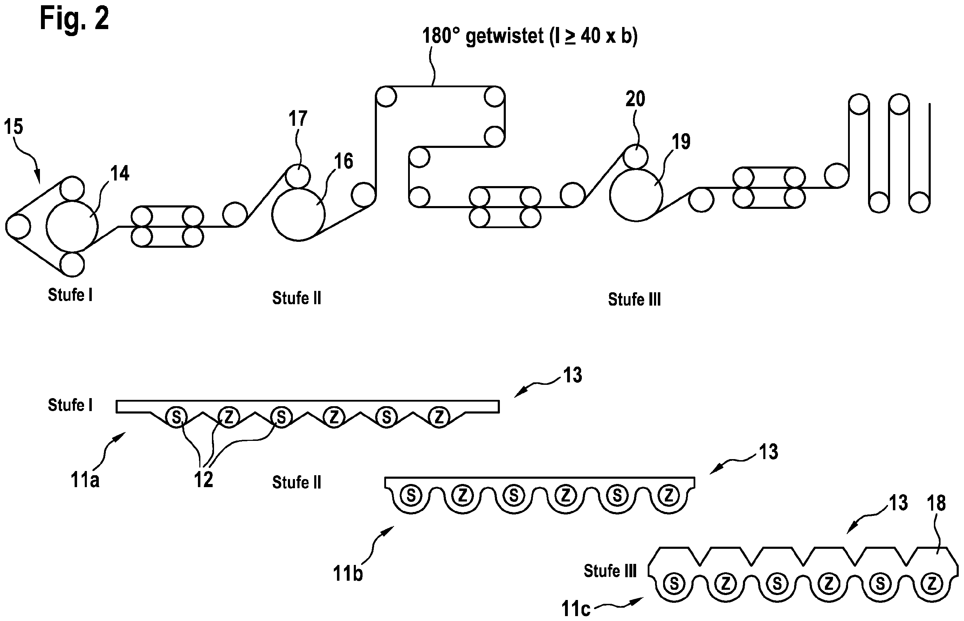

Fig. 2 zeigt in Form einer Prinzipskizze die Durchführung des Verfahrens zur Herstellung eines doppelt profilierten Aufzugsgurts.

Das Zug- oder Tragmittel ist hier als Aufzugsgurt 11 ausgebildet, besteht aus drei Bauteilen oder Baugruppen 11a, 11b und 11c und wird in drei Teilschritten hergestellt, in der Skizze wiederum mit Stufe I, Stufe II und Stufe III bezeichnet.

Im ersten Teilschritt (Stufe I) wird ein erstes Bauteil in Form einer mit nur teilweise ummantelten Tragseilen 12 versehenen Lage 13 des Aufzuggurts hergestellt.

Dies erfolgt auf einem ersten Formrad 14, das eine mit einem zum Profil der Lage 13 negatives Oberflächenprofil besitzt. Dabei wird - hier nicht näher dargestellt - ein plastifizierbares elastomeres Material aus einem Extruder auf das temperierte Formrad gegeben. Gleichzeitig laufen über eine entsprechende Zuführungen die Tragseile 12 in das elastomere Material und auf das Formrad 14.

Mit einem rollengeführten und auf einen Umfangssektor des Formrads 14 einwirkenden Andruckband 15 werden die Tragseile und das extrudierte Material weiter zusammengeführt und unter Druck miteinander verbunden. In diesem ersten Teilschritt werden die Tragseile 12 nur teilweise ummantelt.

Im zweiten Teilschritt (Stufe II) werden die teilweise ummantelten Tragseile vollständig ummantelt. Die vollständige Ummantelung erfolgt durch ein auf einem zweiten Formrad 16 vorgesehenem Profil. Dazu wird auch hier weiteres elastomeres Material aus einem ebenfalls hier nicht näher dargestellten zweiten Extruder zusammen mit der Lage 13 auf das Formrad 16 aufgegeben und unter Druck, hier durch die Andruckrolle 17 miteinander verbunden.

In einem dritten Teilschritt (Stufe III) wird nach einer um 180° erfolgten Verdrehung (Twist) des Aufzuggurts das erste Bauteil mit einer profilierten Rückenlage 18 aus elastomerem Material versehen, wobei die Rückenlage auf ein drittes Formrad 19 aufgebracht und profiliert wird, in gleicher Weise wie oben geschildert, unter Zugabe weiteren extrudierten Materials und mit einer Andruckrolle 20.

### Bezugszeichenliste

### (Teil der Beschreibung)

- 1: Keilrippenriemen
- 1a -1c: Bauteile / Baugruppe des Keilriemens
- 2: Rückenlage
- 3: Formrad
- 4: Andruckband
- 5: Unterbau
- 6: Formrad
- 7: Andruckrolle
- 8: Brandhemmendes elastomeres Material
- 9: Formrad
- 10: Andruckrolle
- 11: Aufzuggurt
- 11a-11c: Bauteile / Baugruppe des Aufzuggurts
- 12: Tragseil
- 13: Erste Lage des Aufzuggurts
- 14: Formrad
- 15: Andruckband
- 16: Formrad
- 17: Andruckrolle
- 18: Profilierte Rückenlage des Aufzuggurts
- 19: Formrad
- 20: Andruckrolle

## Patentansprüche

1. Verfahren zur in mehreren Teilschritten erfolgenden Herstellung eines aus mehreren Bauteilen oder Baugruppen aufgebauten Aufzuggurts oder Antriebsriemens (1,11) aus elastomerem Material, bei dem das elastomere Material extrudiert wird, wobei in einem ersten Teilschritt die Herstellung eines mit Festigkeitsträgern oder Seilen versehenen ersten Bauteils bzw. Baugruppe (1a, 11a) des Aufzuggurts oder Antriebsriemens und in weiteren Teilschritten die sukzessive Komplettierung des mit weiteren Bauteilen (1b, 1c, 11b, 11c) verbundenen bzw. mit weiteren Lagen elastomeren Materials, Gewebelagen oder Festigkeitsträgerlagen versehenen Aufzuggurts oder Antriebsriemens sowie ggf. dessen ein- oder mehrseitige Profilierung bzw. Formung erfolgt, wobei die Verbindung der einzelnen Bauteile des Aufzuggurts oder Antriebsriemens sowie dessen Formung und Komplettierung durch weitere Lagen in den einzelnen Teilschritten mittels ggf. profilierten Formrädern (3, 6, 9, 14, 16, 19) erfolgt, auf die die weiteren Materialien für die einzelnen Bauteile oder Lagen aufgegeben und mit Hilfe von Andruckrollen (7, 10, 17, 20) oder von auf einen Umfangssektor der Formräder einwirkenden Andruckbändem (4, 15) mit den bereits gefertigten Bauteilen zusammengeführt und miteinander verbunden werden, **dadurch gekennzeichnet, dass** die einzelnen Teilschritte im Verfahren so aufeinander folgen, dass ein in dem jeweilig vorlaufenden Teilschritt bearbeitetes oder komplettiertes Bauteil bei Raumtemperatur (Rt) nach einer Zeitspanne von 1 bis 10 Minuten, vorzugsweise 2 bis 5 Minuten, dem nachfolgenden Teilschritt zur weiteren Bearbeitung bzw. Komplettierung zugeführt wird und dass die Temperatur des Bauteils zwischen einem jeweilig vorlaufenden Teilschritt und dem nachfolgenden Teilschritt 30° C, vorzugweise 40° nicht unterschreitet, wobei die einzelnen Teilschritte im Verfahren so aufeinander folgen, dass ein in dem jeweilig vorlaufenden Teilschritt bearbeitetes oder komplettiertes Bauteil dem nachfolgenden Teilschritt zur weiteren Bearbeitung bzw. Komplettierung spätestens nach Ablauf einer Zeitspanne zugeführt wird, die ausgehend von den maximal 10 Minuten bei Raumtemperatur (Rt) um maximal 10 Minuten pro 10° Temperaturerhöhung verlängert ist, und dass die Temperatur des Bauteils eine obere Grenze von 100° C, vorzugsweise 80° C nicht überschreitet.

2. Verfahren nach Anspruch 1, bei dem der Aufzuggurt oder Antriebsriemen als Keilrippenriemen (1) ausgebildet ist, aus mindestens drei Bauteilen oder Baugruppen aufgebaut ist und in mindestens drei Teilschritten hergestellt wird, wobei im ersten Teilschritt ein erstes Bauteil in Form einer mit Festigkeitsträgern versehenen Rückenlage (2) des Keilrippenriemens auf einem ersten Formrad (3) mit glatter Oberfläche hergestellt wird, im zweiten Teilschritt die Rückenlage mit dem profilierten Unterbau (5) des Keilrippenriemens versehen wird, wobei der Unterbau während des zweiten Teilschritts auf einem zweiten Formrad (6) profiliert wird, und im dritten Teilschritt auf einem weiteren Formrad (9) eine weitere Beschichtung (8), Elastomerlage oder Gewebelage auf den profilierten Unterbau aufgebracht wird.

3. Verfahren nach Anspruch 1, bei dem der Aufzuggurt oder Antriebsriemen als doppelt profilierter Aufzugsgurt (11) ausgebildet ist, aus mindestens drei Bauteilen oder Baugruppen aufgebaut ist und in mindestens drei Teilschritten hergestellt wird, wobei im ersten Teilschritt ein erstes Bauteil (13) in Form einer mit teilweise ummantelten Tragseilen versehenen Lage des Aufzuggurts durch ein auf einem ersten Formrad (14) vorgesehenen Profil hergestellt wird, im zweiten Teilschritt die teilweise ummantelten Tragseile vollständig ummantelt werden, wobei die Ummantelung während des zweiten Teilschritts durch ein auf einem zweiten Formrad (16) vorgesehenen Profil weiter geformt wird, und danach im dritten Teilschritt nach einer um 180° erfolgten Verdrehung (Twist) des Aufzuggurts (11) das Bauteil auf ein drittes Formrad aufläuft und dort mit einer profilierten Rückenlage (18) aus elastomerem Material versehen wird, wobei die Rückenlage zwischen Bauteil und drittem Formrad (19) aufgebracht und von letzterem profiliert wird.

4. Verfahren nach Anspruch 2 oder 3, bei dem in den einzelnen Teilschritten als elastomeres Material für die Bauteile Polyurethan verwendet wird, das extrudiert auf das jeweilige Formrad aufgebracht wird, wobei die extrudierte Polyurethanschmelze mit einer Temperatur von 180° bis 220° C, vorzugsweise 210°C auf das jeweilge Formrad aufgegeben wird, wobei das Formrad gekühlt wird und die Kühlung des Formrades und dessen Fertigungsgeschwindigkeit so eingestellt sind, dass das jeweilige Bauteil beim Ablaufen vom Formrad eine Temperatur 60° bis 100° C aufweist, und bei dem in den folgenden Teilschritten unmittelbar vor der Aufgabe weiteren extrudierten Materials das vorlaufende, bereits fertiggestellte Bauteil auf seiner mit dem weiteren Bauteilen zu verbindenden Oberfläche auf eine Temperatur von 160° bis 200°C aufgeheizt wird.

## Claims

1. Process for the production, in a plurality of substeps, of a lift belt or drive belt (1, 11) built up from a plurality of components or assemblies and consisting of elastomeric material, in which the elastomeric material is extruded, wherein, in a first substep, a first component or assembly (1a, 11a), provided with reinforcing members or cables, of the lift belt or drive belt is produced and, in further substeps, the lift belt or drive belt, which is connected to further components (1b, 1c, 11b, 11c) or provided with further layers of elastomeric material, fabric layers or reinforcing-member layers, is successively completed, and optionally said lift belt or drive belt is shaped or profiled on one or more sides, wherein the connection of the individual components of the lift belt or drive belt and its shaping and completion by further layers in the individual substeps are achieved by means of optionally profiled shaping wheels (3, 6, 9, 14, 16, 19) to which the further materials for the individual components or layers are fed and, with the aid of press-on rollers (7, 10, 17, 20) or of press-on belts (4, 15) acting on a circumferential sector of the shaping wheels, are brought together with the already produced components and connected to one another, **characterized in that** the individual substeps in the process follow one another such that a component processed or completed in the respectively preceding substep is fed at room temperature (Rt), after a time period of 1 to 10 minutes, preferably 2 to 5 minutes, to the subsequent substep for further processing or completion, and such that the temperature of the component does not drop below 30°C, preferably 40°C, between a respectively preceding substep and the subsequent substep, wherein the individual substeps in the process follow one another such that a component processed or completed in the respectively preceding substep is fed to the subsequent substep for further processing or completion at the latest after expiry of a time period which, starting from the maximum of 10 minutes at room temperature (Rt), is extended by a maximum of 10 minutes per 10°C temperature increase, and such that the temperature of the component does not exceed an upper limit of 100°C, preferably 80°C.

2. Process according to Claim 1, in which the lift belt or drive belt is designed as a V-ribbed belt (1), is built up from at least three components or assemblies and is produced in at least three substeps, wherein, in the first substep, a first component in the form of a back layer (2), provided with reinforcing members, of the V-ribbed belt is produced on a first shaping wheel (3) having a smooth surface, and, in the second substep, the back layer is provided with the profiled substructure (5) of the V-ribbed belt, wherein the substructure is profiled on a second shaping wheel (6) during the second substep, and, in the third substep, a further coating (8), elastomer layer or fabric layer is applied to the profiled substructure on a further shaping wheel (9).

3. Process according to Claim 1, in which the lift belt or drive belt is designed as a double-profiled lift belt (11), is built up from at least three components or assemblies and is produced in at least three substeps, wherein, in the first substep, a first component (13) in the form of a layer of the lift belt that is provided with partially sheathed carrying cables is produced by means of a profile provided on a first shaping wheel (14), and, in the second substep, the partially sheathed carrying cables are completely sheathed, wherein the sheathing is further shaped during the second substep by means of a profile provided on a second shaping wheel (16), and then, in the third substep, after the lift belt (11) has been twisted through 180°, the component runs onto a third shaping wheel and is provided there with a profiled back layer (18) consisting of elastomeric material, wherein the back layer is applied between component and third shaping wheel (19) and profiled by the latter.

4. Process according to Claim 2 or 3, in which, in the individual substeps, the elastomeric material used for the components is polyurethane which is applied in extruded form to the respective shaping wheel, wherein the extruded polyurethane melt is fed to the respective shaping wheel at a temperature of 180°C to 220°C, preferably 210°C, wherein the shaping wheel is cooled and the cooling of the shaping wheel and its production speed are set such that, upon running off the shaping wheel, the respective component has a temperature of 60°C to 100°C, and in which, in the following substeps, directly prior to the feeding of further extruded material, the preceding, already finished component is heated, on its surface to be connected to the further components, to a temperature of 160°C to 200°C.

## Revendications

1. Procédé de fabrication, en plusieurs sous-étapes, d'une courroie d'ascenseur ou courroie d'entraînement (1, 11) en matière élastomère constituée de plusieurs composants ou ensembles, procédé dans lequel la matière élastomère étant extrudée, la fabrication d'un premier composant ou ensemble (1a, 11a), muni de renforts ou de câbles, de la courroie d'ascenseur ou courroie d'entraînement étant effectuée dans une première sous-étape et la complémentation successive de la courroie d'ascenseur ou courroie d'entraînement, reliée à d'autres composants (1b, 1c, 11b, 11c) ou pourvue d'autres couches de matériau élastomère, de couches de tissu ou de couches de renfort, ainsi qu'éventuellement son profilage ou formage sur un ou plusieurs côtés étant effectués dans d'autres sous-étapes ; la liaison des composants individuels de la courroie d'ascenseur ou courroie d'entraînement ainsi que son formage et sa complémentation par d'autres couches étant effectués dans les sous-étapes individuelles au moyen de roues de formage (3, 6, 9, 14, 16, 19) éventuellement profilées sur lesquelles les autres matières destinées aux composants individuels ou couches individuelles sont déposées et assemblées avec les composants déjà fabriqués et reliés entre eux à l'aide de rouleaux presseurs (7, 10, 17, 20) ou de bandes presseuses (4, 15), agissant sur un secteur circonférentiel des roues de formage, **caractérisé en ce que** les sous-étapes individuelles se succèdent dans le procédé de telle sorte qu'un composant traité ou complémenté dans la sous-étape précédente respective est amené à la sous-étape suivante à la température ambiante (Rt) au bout d'un laps de temps de 1 à 10 minutes, de préférence de 2 à 5 minutes, en vue d'un traitement ultérieur ou une complémentation ultérieure et **en ce que** la température du composant entre une sous-étape précédente respective et la sous-étape suivante ne descend pas au-dessous de 30 °C, de préférence 40 °, les sous-étapes individuelles se succédant dans le procédé de telle sorte qu'un composant traité ou complété dans la sous-étape précédente respective soit amené à la sous-étape suivante en vue d'un traitement ultérieur ou d'une complémentation ultérieure au plus tard au bout d'un laps de temps qui à partir du maximum de 10 minutes à la température ambiante (Rt), est prolongé d'un maximum de 10 minutes par augmentation de température de 10 °, et **en ce que** la température du composant ne dépasse pas une limite supérieure de 100 °C, de préférence 80 °C.

2. Procédé selon la revendication 1, dans lequel la courroie d'ascenseur ou courroie d'entraînement est conçue comme une courroie trapézoïdale à nervures (1), est constituée d'au moins trois composants ou ensembles et est fabriquée en au moins trois sous-étapes, un premier composant étant fabriqué dans la première sous-étape sous la forme d'une couche arrière (2), munie d'un renfort, de la courroie trapézoïdale à nervures produit sur une première roue de formage (3) à surface lisse, la couche arrière étant pourvue, dans la deuxième sous-étape, de la sous-structure profilée (5) de la courroie trapézoïdale à nervures, la sous-structure étant profilée sur une deuxième roue de formage (6) pendant la deuxième sous-étape, et un autre revêtement (8), une couche d'élastomère ou une couche de tissu étant appliqué, dans la troisième sous-étape, sur la sous-structure profilée sur une autre roue de formage (9).

3. Procédé selon la revendication 1, dans lequel la courroie d'ascenseur ou courroie d'entraînement est conçue comme une courroie d'ascenseur doublement profilée (11), est composée d'au moins trois composants ou ensembles et est fabriquée en au moins trois sous-étapes, un premier composant (13) sous la forme d'une couche, munie de câbles de support partiellement gainés, de la ceinture d'ascenseur étant fabriqué dans la première sous-étape par un profil prévu sur une première roue de formage (14), les câbles de support partiellement gainés étant entièrement gainés dans la deuxième sous-étape, le gainage étant en outre formé pendant la deuxième sous-étape par un profil prévu sur une deuxième roue de formage (16) puis, dans la troisième sous-étape, après que la courroie d'ascenseur (11) a été soumise à une torsion (twist) de 180°, le composant étant monté sur une troisième roue de formage où il est muni d'une couche arrière profilée (18) en matière élastomère, la couche arrière étant appliquée entre le composant et la troisième roue de formage (19) et étant profilée par cette dernière.

4. Procédé selon la revendication 2 ou 3, dans lequel dans les sous-étapes individuelles, du polyuréthane est utilisé comme matière élastomère pour les composants, laquelle est appliquée par extrusion sur la roue de formage respective, la masse fondue de polyuréthane extrudée étant appliquée sur la roue de formage respective à une température de 180 ° à 220 °C, de préférence de 210 °C, la roue de formage étant refroidie et le refroidissement de la roue de formage et sa vitesse de fabrication étant réglés de sorte que le composant respectif ait une température de 60 ° à 100 °C lorsqu'il est déroulé de la roue de formage et, dans les sous-étapes suivantes, immédiatement avant l'application d'une autre matière extrudée, le composant précédent déjà fabriqué est chauffé sur sa surface qui doit être reliée aux autres composants à une température de 160 ° à 200 °C.
